# EUROPEAN PATENT SPECIFICATION

(11) **EP 3 429 272 B1**
(45) Date of publication and mention of the grant of the patent: **10.05.2023**
(21) Application number: 16906664.4
(22) Date of filing: 29.06.2016
(51) Int. Cl.: H04W 40/20

(54) **COMMUNICATION METHOD, FORWARDING DEVICE, AND TERMINAL DEVICE**
KOMMUNIKATIONSVERFAHREN, WEITERLEITUNGSVORRICHTUNG UND ENDGERÄTEVORRICHTUNG
PROCÉDÉ DE COMMUNICATION, DISPOSITIF DE RÉACHEMINEMENT, ET DISPOSITIF TERMINAL

(43) Date of publication of application: 16.01.2019
(73) Proprietor: GUANGDONG OPPO MOBILE TELECOMMUNICATIONS CORP., LTD., Wusha, Chang'an Dongguan, Guangdong 523860 (CN)
(72) Inventor: TANG, Hai, Dongguan Guangdong 523860 (CN); HU, Xin, Dongguan Guangdong 523860 (CN); WANG, Qiang, Dongguan Guangdong 523860 (CN); WEI, Wei, Dongguan Guangdong 523860 (CN); YANG, Lina, Dongguan Guangdong 523860 (CN)
(74) Representative: Manitz Finsterwald Patent- und Rechtsanwaltspartnerschaft mbB
(86) International application number: PCT/CN2016/087746
(87) International publication number: WO 2018/000263

(56) References cited:
- EP-A1- 2 127 263
- EP-A1- 2 262 188
- EP-B1- 2 127 263
- EP-B1- 2 262 188
- CN-A- 102 665 168
- CN-A- 103 200 526
- CN-A- 105 391 631
- CN-A- 105 407 517
- CN-A- 105 578 552
- US-A1- 2009 207 783
- US-A1- 2014 159 923

## Description

### TECHNICAL FIELD

The disclosure relates to the field of communications, and in particular to communication methods and, respectively, a forwarding device and terminal devices, as defined by claims 1,8,12 and claims 13,14,15.

### BACKGROUND

Currently, a Vehicular Ad-hoc network (VANET) is a hot spot in the field of mobile Internet research. As an important part of an Intelligent Transport System (ITS), the VANET achieves an effective and reliable interaction process between safe driving and vehicles by exchanging real-time reliable safety information and multimedia service information on the basis of communications between vehicles and a Road Side Unit (RSU), between vehicles, between vehicles and a base station, and between an RSU and a base station. With the popularity of a Global Positioning System (GPS), running vehicles in the VANET may have rich external auxiliary information, not only their own location information may be obtained, but also geographic information of a region such as intersection distribution, road direction and a regional map may be obtained.

The VANET is a specific application of a traditional Mobile ad-hoc network (MANET) to roads. It has various characteristics of the MANET such as autonomy, no fixed structure, multi-hop routing, and dynamic changes of a network topology. The VANET currently plays an important role in safe driving and driving comfort. The application may be divided into two major categories. One mainly solves the problem of driving safety, and correspondingly, messages being transmitted have a high priority. The other one is mainly to provide users with value-added services such as functions of implementing multimedia entertainment of passengers in vehicles, and correspondingly, messages being transmitted have a low priority.

The VANET usually adopts a wireless communication standard IEEE 802.11p, which is a communication standard adopted by Dedicated Short Range Communications (DSRC), and the communication coverage is small. Therefore, vehicles will be inevitably switched frequently in a high-speed mobile environment. When the distance between transmitting and receiving vehicles exceeds a certain range, the transmitting power must be increased to ensure the service continuity of the vehicle communication. When the distance between vehicles continues to be increased, simple increase of the transmission power still cannot solve the problem. In this case, it is necessary to forward information between the transmitting and receiving vehicles by using a multi-hop relay.

In the prior art, a dynamic routing scheme for a multi-hop relay node (i.e., how to select a suitable relay node to forward data and determine a suitable topology connection path) is mainly divided into a centralized routing scheme and a distributed routing scheme. The centralized routing is a strategy of a dynamic routing algorithm, that is, a base station is responsible for collecting and calculating information in the entire network system and planning and implementing an optimal path, and the base station periodically transmits an implementation solution to each node in the network. Apparently, the base station needs to spend a lot of resources to update a routing table. In addition, when the traffic volume is large or when it is the peak of traffic, the centralized selection scheme will cause an overload on the base station. In the distributed routing scheme, each node exchanges cost and routing information with neighboring nodes on an interactive basis until an optimal topology connection path is obtained. It is apparent that the interactive broadcast process between relay nodes causes a large number of invalid broadcasts, resulting in a large signaling overhead, and the entire interactive process has low convergence and consumes a large delay.

EP2262188A1 discloses a method for disseminating a data packet towards a destination via multi-hop communication in a communication network. US2009/0207783A1 discloses a communication method using a virtual sink node in a wireless sensor network. EP2127263A1 discloses a method for information dissemination in a communication network.

### SUMMARY

The present invention is defined in the claims.

### BRIEF DESCRIPTION OF DRAWINGS

In order to describe the technical solutions in the embodiments of the disclosure more clearly, the drawings required to be used in descriptions about the embodiments of the disclosure will be simply introduced below. Obviously, the drawings in the following descriptions are only some embodiments of the disclosure. Those of ordinary skilled in the art may further obtain other drawings according to these drawings without creative work.
FIG. 1 illustrates a schematic diagram of an application scenario.
FIG. 2 illustrates a schematic flowchart of a communication method.
FIG. 3 illustrates a schematic diagram of a communication method.
FIG. 4 illustrates a schematic flowchart of a communication method.
FIG. 5a and FIG. 5b illustrate schematic diagrams of a message.
FIG. 6 illustrates a schematic diagram of an information packet.
FIG. 7 illustrates a schematic flowchart of a communication method.
FIG. 8 illustrates a schematic flowchart of a communication method.
FIG. 9 illustrates a schematic flowchart of a communication method.
FIG. 10 illustrates a schematic block diagram of a forwarding device.
FIG. 11 illustrates a schematic block diagram of a terminal device.
FIG. 12 illustrates a schematic block diagram of a terminal device.
FIG. 13 illustrates a schematic block diagram of a communication device.
FIG. 14 illustrates a schematic block diagram of a communication device.
FIG. 15 is a structural schematic diagram of a communication device.

### DETAILED DESCRIPTION

The technical solutions in the embodiments of the disclosure are clearly and completely described in the following with reference to the accompanying drawings in the embodiments of the disclosure. All other embodiments obtained by those skilled in the art based on the embodiments of the disclosure without creative efforts fall within the scope of protection of the disclosure, as defined by the appended set of claims.

It should be understood that the technical solutions of the embodiments of the disclosure may be applied to various vehicle-vehicle communication systems or networks or terminal-terminal communication systems or networks such as a VANET and a MANET.

The terminal device may also be a vehicle, a User Equipment (UE), an access terminal, a user unit, a user station, a mobile radio station, a mobile station, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device having a wireless communication function, a computing device or other processing devices connected to a wireless modem, an in-vehicle device, a wearable device, a terminal device in a future 5G network, or a terminal device in a future evolved Public Land Mobile Network (PLMN).

The forwarding device of the disclosure is a network device for forwarding an information packet of a terminal device. For example, the forwarding device may be an RSU or a wireless router.

A base station is a network device in a communication system, may be a Base Transceiver Station (BTS) in a GSM or a CDMA system, or may be a NodeB (NB) in a WCDMA system, or may be an Evolutional NodeB (eNB or eNodeB) in an LTE system. The disclosure is not limited thereto.

The communication device of the disclosure is any one of the above devices namely the terminal device, the forwarding device or the base station.

For convenience of description, the following embodiments will be described by way of example of a vehicle, an RSU and a base station, but this should not be construed as limiting the disclosure.

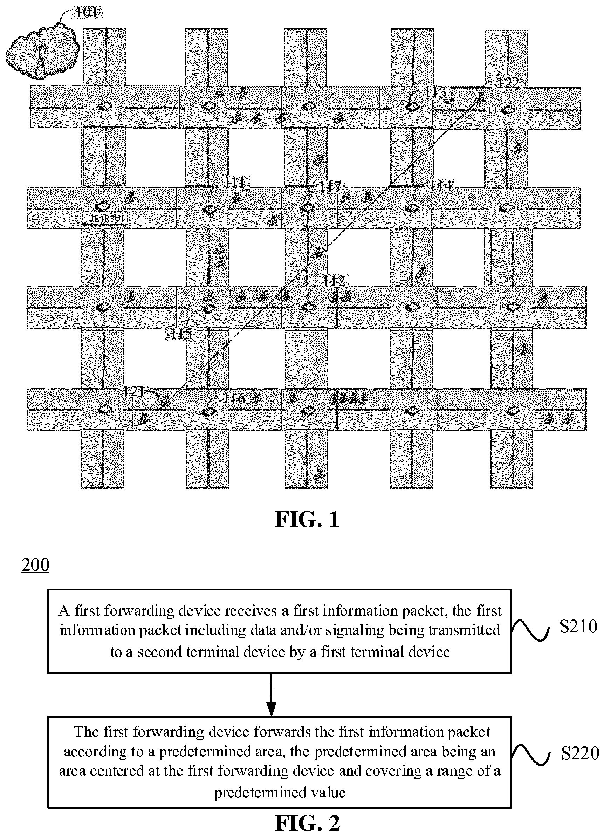

FIG. 1 illustrates a schematic diagram of an application scenario according to an embodiment of the disclosure. As illustrated in FIG. 1, the scenario includes a base station 101, multiple forwarding devices such as forwarding devices 111 to 117, and multiple terminal devices such as a terminal device 121 and a terminal device 122. The terminal device 121 is intended to communicate with the terminal device 122. The scenario in FIG. 1 may be a traffic scenario. In this case, the terminal device may be a vehicle, and the forwarding device may be an RSU.

FIG. 2 illustrates a schematic block diagram of a communication method 200 according to another embodiment of the disclosure. The method 200 is performed by a forwarding device (denoted as a first forwarding device), such as the forwarding device of FIG. 1. As illustrated in FIG. 2, the method 200 includes the operations as follows.

At S210, a first forwarding device receives a first information packet, the first information packet including data and/or signaling being transmitted to a second terminal device by a first terminal device.

At S220, the first forwarding device forwards the first information packet according to a predetermined area, the predetermined area being an area centered at the first forwarding device and covering a range of a predetermined value.

The first terminal device represents a source node of the first information packet, the second terminal device represents a target node of the first information packet, and the first forwarding device represents any forwarding device in the forwarding process of the first information packet.

The first forwarding device forwards the first information packet according to the predetermined area, the predetermined area being an area centered at the first forwarding device and covering a range of a predetermined value. In other words, the first forwarding device does not need to consider the entire network, and only needs to consider the predetermined area, that is, the first forwarding device only needs to acquire information about the predetermined area, so that compared with the solution of acquiring the entire network information, the signaling overhead can be reduced, and thus the communication efficiency can be improved.

Therefore, according to the communication method of the disclosure, an information packet is forwarded according to a predetermined area, so that the signaling overhead can be reduced, and thus the communication efficiency can be improved.

It should be understood that in the disclosure, the information packet carries data and/or signaling to be transmitted between communication devices, and the "information packet" may also be expressed as "packet", "message", "data packet", etc. The specific expression is not limited in the disclosure.

The predetermined area is an area centered at a forwarding device and covering a range of a predetermined value. The predetermined area may also be called a virtual area, and the description of the predetermined area is not limited in the embodiment of the disclosure.

Each forwarding device has a virtual area centered on itself and covering a range of a predetermined value.

Alternatively, the predetermined value may be a predetermined distance or a predetermined number of hops. For example, the predetermined value may be an N hop, where N is a positive integer.

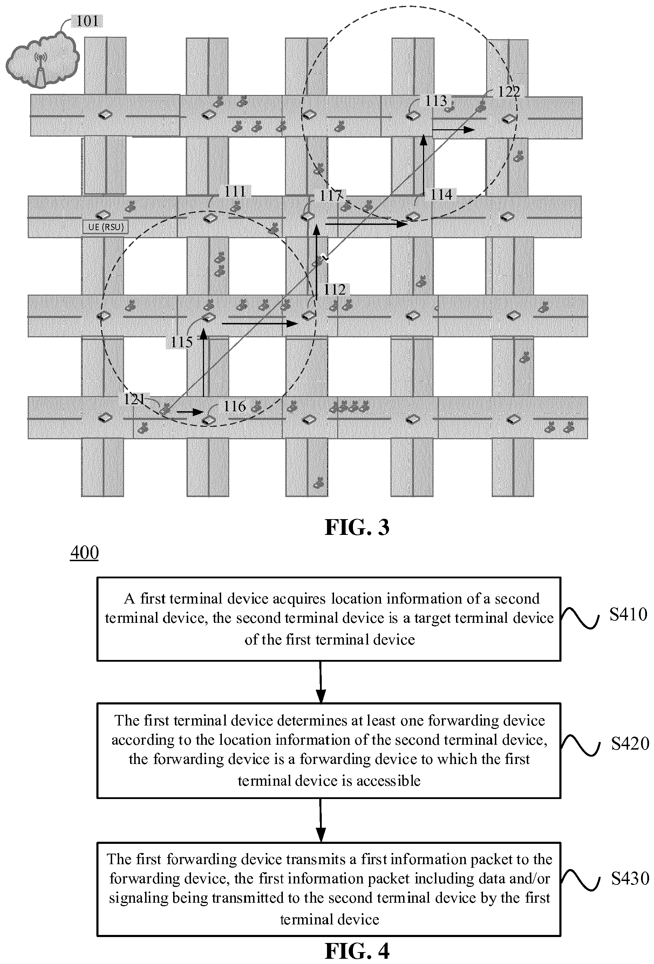

For example, as illustrated in FIG. 3, the predetermined area of the forwarding device 115 may be an area with the forwarding device 115 as a center node and the hop number 1 as a radius.

The predetermined areas corresponding to different forwarding devices may overlapped, that is, a certain forwarding device may belong to multiple predetermined areas at the same time.

In each predetermined area, a node with a hop number of N from the center node may be called an area edge node, and a node hopped from the center node N-1 to 0 is defined as an intra-area node. As illustrated in FIG. 3, since the hop number N value is 1, the forwarding devices 111, 112, and 116 in the predetermined area of the forwarding device 115 are the area edge nodes, and the forwarding device 115 is the intra-area node.

Alternatively, in each predetermined area, the central node periodically exchanges with other nodes and updates network topology connection information in the current predetermined area, thereby acquiring routing information in the predetermined area. That is to say, the central node may obtain routing information from the local node to all the remaining nodes in the predetermined area, that is, may acquire routing information of all remaining nodes in an arriving area.

In the embodiment of the disclosure, the forwarding device forwards an information packet according to a predetermined area, that is, forwards the information packet in the predetermined area.

The first information packet further includes location information of the second terminal device.

The operation that the first forwarding device forwards the first information packet according to a predetermined area includes that, the first forwarding device forwards the first information packet according to the predetermined area and the location information of the second terminal device.

It should be understood that the first forwarding device may further acquire location information of the second terminal device in other manners. In other words, including location information of the second terminal device in the first information packet is only a preferred implementation manner. However, the disclosure is not limited.

Alternatively, in an embodiment of the disclosure, the operation that the first forwarding device forwards the first information packet according to the predetermined area and the location information of the second terminal device includes that, when the second terminal device is not in the predetermined area, the first forwarding device transmits the first information packet to a second forwarding device at the edge of the predetermined area. Here, the second forwarding device is located at a side of the first forwarding device close to the second terminal device.

Specifically, the first forwarding device determines, according to the predetermined area and the location information of the second terminal device, whether the second terminal device is in the predetermined area. When the second terminal device is not in the predetermined area, the first forwarding device transmits the first information packet to the second forwarding device at the edge of the predetermined area. The second forwarding device is located at a side of the first forwarding device close to the second terminal device. That is, the first forwarding device transmits the first information packet to an area edge node in the direction from the first terminal device to the second terminal device.

It should be understood that the manner in which the first forwarding device transmits the first information packet to the second forwarding device may be direct transmitting or indirect transmitting. In other words, when the first forwarding device cannot directly transmit the first information packet to the second forwarding device, the first forwarding device may indirectly transmit the first information packet to the second forwarding device through another forwarding device.

For example, the forwarding device 115 in FIG. 3 is taken as an example. When the terminal device 121 transmits an information packet to the terminal device 122, the forwarding device 115 determines that the terminal device 122 is not in the predetermined area of the forwarding device 115, and thus the information packet is transmitted along the direction from the terminal device 121 to the terminal device 122, that is, the information packet may be transmitted to the forwarding device 111 or the forwarding device 112.

Alternatively, the first forwarding device may acquire routing information in the predetermined area, and transmit the first information packet to the second forwarding device according to the routing information in the predetermined area.

As above, the first forwarding device may periodically exchange with other forwarding devices in the predetermined area and update network topology connection information in the current predetermined area, thereby acquiring routing information in the predetermined area.

Alternatively, in another embodiment of the disclosure, the operation that the first forwarding device forwards the first information packet according to the predetermined area and the location information of the second terminal device includes that, when the second terminal device is in the predetermined area, the first forwarding device transmits the first information packet to the second terminal device.

Specifically, the first forwarding device determines, according to the predetermined area and the location information of the second terminal device, whether the second terminal device is in the predetermined area. When the second terminal device is in the predetermined area, the first forwarding device transmits the first information packet to the second terminal device. Alternatively, the first forwarding device may transmit the first information packet to the second terminal device through a directed antenna.

It should be understood that the manner in which the first forwarding device transmits the first information packet to the second terminal device may be direct transmitting or indirect transmitting. In other words, when the first forwarding device cannot directly transmit the first information packet to the second terminal device, the first forwarding device may indirectly transmit the first information packet to the second terminal device through another forwarding device.

For example, the forwarding device 113 in FIG. 3 is taken as an example. When the terminal device 121 transmits an information packet to the terminal device 122, the forwarding device 113 determines that the terminal device 122 is in the predetermined area of the forwarding device 113, and thus the information packet is directly transmitted to the terminal device 122.

Alternatively, in an embodiment of the disclosure, the method may further include that, when the first forwarding device receives the first information packet, the first forwarding device writes time information indicating when the first information packet is received into the first information packet.

Specifically, the first terminal device may write the transmitting time to the information packet when transmitting the information packet, and each forwarding device writes the receiving time of the information packet into the information packet, so that the delay of a link may be determined through the times.

Alternatively, the forwarding device may also write the number of hops in the forwarding into the information packet.

Alternatively, in an embodiment of the disclosure, the first information packet may further include an information level.

The information level indicates that the information level of the first information packet is a normal level. The information level may be written into the first information packet by the first forwarding device.

The first forwarding device determines that the information level of the first information packet is a normal level according to the information level.

Alternatively, in an embodiment of the disclosure, the first information packet may further include at least one of identification information of the first terminal device, identification information of the second terminal device or location information of the first terminal device. It should be understood that the first information packet may also include other fields, which are not limited by the disclosure.

The location information of the first terminal device includes location information of the first terminal device at time *T*₀ and/or time *T*₀ + Δ*T*, or location information of the first terminal device at time *T*₀ and/or direction information of the first terminal device at time *T*₀, and the location information of the second terminal device includes location information of the second terminal device at time *T*₀ and/or time *T*₀ + Δ*T*, or location information of the second terminal device at time *T*₀ and/or direction information of the second terminal device at time *T*₀, where *T*₀ represents a specific time before the first terminal device transmits the first information packet, and ΔT represents a change in time.

Specifically, each terminal device may acquire its own location information such as latitude and longitude coordinate information at the current time *T*₀ according to its own positioning module such as a GPS module, determine direction information at time *T*₀, and determine information such as speed and acceleration according to its own motion detection module, so as to predict the location information at *T₀ +* Δ*T*. Each terminal device may transmit the location information of the terminal device to the base station. For example, the terminal device reports the location information at time *T*₀ and/or time *T*₀ + Δ*T*, or the location information and/or the direction information at time *T*₀ to the base station, such that a transmitting terminal device of the information packet may acquire the location information of a receiving terminal device of the information packet from the base station.

The communication method of the embodiment of the disclosure is described above from the view of the forwarding device, and the communication method of the embodiment of the disclosure is described below from the view of terminal device.

FIG. 4 illustrates a schematic block diagram of a communication method 400 according to another embodiment of the disclosure. The method 400 is performed by a source node of an information packet (denoted as a first terminal device), such as the terminal device 121 in FIG. 1. As illustrated in FIG. 4, the method 400 includes the operations as follows.

At S410, a first terminal device acquires location information of a second terminal device. The second terminal device is a target terminal device of the first terminal device.

At S420, the first terminal device determines at least one forwarding device according to the location information of a second terminal device. The forwarding device is a forwarding device to which the first terminal device is accessible.

At S430, the first forwarding device transmits a first information packet to the forwarding device. The first information packet includes data and/or signaling being transmitted to the second terminal device by the first terminal device.

When the first terminal device is intended to transmit data to the second terminal device, a forwarding device to which the first terminal device is accessible is selected according to the location information of the second terminal device. For example, a forwarding device, close to the side of the second terminal device, of the first terminal device is selected, the first information packet is transmitted to the forwarding device, and then the forwarding device continues to forward the first information packet. That is to say, the first terminal device directionally transmits an information packet according to location information, so that the communication efficiency is improved.

The first information packet further includes location information of the second terminal device. The location information of the second terminal device may be used for the directed forwarding of a subsequent forwarding device.

The location information of the first terminal device includes location information of the first terminal device at time *T*₀ and/or time T₀ + Δ*T*, or location information at time *T*₀ and/or direction information at time *T*₀. The location information of the second terminal device includes location information of the second terminal device at time *T*₀ and/or time *T*₀ + Δ*T*, or location information at time *T*₀ and/or direction information at time *T*₀. *T*₀ represents a specific time before the first terminal device transmits the first information packet, and Δ*T* represents a change in time.

Alternatively, the first terminal device acquires location information of the first terminal device at time *T*₀ from a positioning module of the first terminal device, and/or determines location information of the first terminal device at time *T*₀ + Δ*T*.

Or, the first terminal device acquires location information of the first terminal device at time *T*₀ from a positioning module of the first terminal device, and/or determines direction information of the first terminal at time *T*₀.

The first terminal device receives location information of the second terminal device transmitted by a base station.

Alternatively, the method further includes one of the following operations.

The first terminal device transmits location information of the first terminal device at time *T*₀ and/or time *T*₀ + Δ*T.*

Or, the first terminal device transmits location information and/or direction information of the first terminal device at time *T*₀.

Specifically, each terminal device may acquire its own location information such as latitude and longitude coordinate information at the current time *T*₀ from its own positioning module such as a GPS module, determine direction information at time *T*₀, and determine information such as speed and acceleration from its own motion detection module, so as to predict location information at *T*₀ + Δ*T*. Each terminal device may transmit the location information of the terminal device to the base station. For example, each terminal device reports the location information at time *T*₀ and/or time *T*₀ + Δ*T*, or the location information and/or the direction information at time *T*₀ to the base station, such that a transmitting terminal device of the information packet may acquire the location information of a receiving terminal device of the information packet from the base station.

The first terminal device may acquire location information of the first terminal device at time *T*₀ from the positioning module of the first terminal device, determine direction information of the first terminal device at time *T*₀, and determine location information of the first terminal device at time *T*₀ + Δ*T* from a motion detection module of the first terminal device.

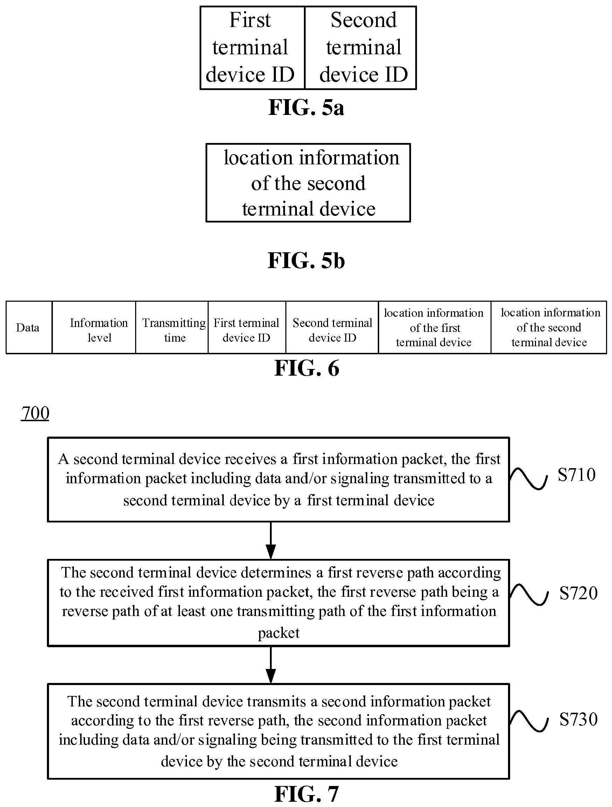

Then, the first terminal device requests the base station for the location information of the second terminal device. For example, the first terminal device may request the base station for a message as illustrated in FIG. 5a. The base station transmits the location information of the second terminal device reported by the second terminal device, such as location information of the second terminal device at time *T*₀ and/or time *T*₀ + Δ*T*, or location information and/or direction information of the second terminal device at time *T*₀, to the first terminal device. For example, the message by which the terminal device reports the location information to the base station and the message by which the base station transmits the location information to the terminal device may be a message as illustrated in FIG. 5b.

Alternatively, after acquiring the location information of the first terminal device and the location information of the second terminal device, the first terminal device may determine a routing device of a next-hop according to the location information of the first terminal device and the location information of the second terminal device. The determined routing device of the next-hop is located at a side of the first terminal device close to the second terminal device.

For example, the terminal device may be equipped with an electronic map, and the terminal device determines a plurality of multi-hop forwarding paths that may exist between transmitting and receiving ends according to the location information of the transmitting and receiving ends through the electronic map, thereby determining a possible next hop. If the distance between the transmitting and receiving ends is *L*, and the distribution density of the forwarding devices is *λ*, there are *λL*²/2 forwarding devices in the square with the straight line distance between the transmitting and receiving ends as the diagonal line, and a number *α*×*λL*²/2 of forwarding paths may be preselected as candidates, where *α* is a preselected path percentage.

For example, in FIG. 3, when the terminal device 121 transmits an information packet to the terminal device 122, the terminal device 121 may select the forwarding device 116 or the forwarding device 115 as a next hop according to the location of the terminal device 121 and the terminal device 122.

Alternatively, the first information packet further includes time information indicating when the first terminal device transmits the first information packet, such as time. The time information may be used to determine the delay of a link.

Alternatively, the first information packet further includes an information level indicating that the information level of the first information packet is a normal level.

Alternatively, the method further includes that the first forwarding device determines that an information level of the first information packet is a normal level.

Alternatively, the first information packet further includes at least one of identification information of the first terminal device, identification information of the second terminal device, or location information of the first terminal device.

For example, the first information packet may adopt a format as illustrated in FIG. 6. It should be understood that FIG. 6 is only an example. In practical applications, the first information packet may adopt more or less fields than those illustrated in FIG. 6.

After the first terminal device transmits the first information packet to a forwarding device of a next-hop, the forwarding device may forward the first information packet according to the method performed at the forwarding device side as described in the foregoing embodiment of the disclosure, and the first information packet is finally transmitted to the second terminal device.

The technical solution of the embodiment of the disclosure will be described below in conjunction with FIG. 3 in a specific example.

As illustrated in FIG. 3, when the terminal device 121 transmits an information packet to the terminal device 122, the terminal device 121 may select the forwarding device 116 as a next hop according to the location of the terminal device 121 and the terminal device 122, and transmit the information packet to the forwarding device 116.

The forwarding device 116 determines that the terminal device 122 is not in the predetermined area of the forwarding device 116, and thus the information packet is transmitted along the direction from the terminal device 121 to the terminal device 122, that is, the information packet may be transmitted to the forwarding device 115.

The forwarding device 115 determines that the terminal device 122 is not in the predetermined area of the forwarding device 115, and thus the information packet is transmitted along the direction from the terminal device 121 to the terminal device 122, that is, the information packet may be transmitted to the forwarding device 112.

The forwarding device 112 determines that the terminal device 122 is not in the predetermined area of the forwarding device 112, and thus the information packet is transmitted along the direction from the terminal device 121 to the terminal device 122, that is, the information packet may be transmitted to the forwarding device 117.

The forwarding device 117 determines that the terminal device 122 is not in the predetermined area of the forwarding device 117, and thus the information packet is transmitted along the direction from the terminal device 121 to the terminal device 122, that is, the information packet may be transmitted to the forwarding device 114.

The forwarding device 114 determines that the terminal device 122 is not in the predetermined area of the forwarding device 114, and thus the information packet is transmitted along the direction from the terminal device 121 to the terminal device 122, that is, the information packet may be transmitted to the forwarding device 113.

The forwarding device 113 determines that the terminal device 122 is in the predetermined area of the forwarding device 113, and thus the information packet is directly transmitted to the terminal device 122.

FIG. 7 illustrates a schematic block diagram of a communication method 700 according to another embodiment of the disclosure. The method 700 is performed by a target node of an information packet (denoted as a second terminal device), such as the terminal device 122 in FIG. 1. As illustrated in FIG. 7, the method 700 includes the operations as follows.

At S710, a second terminal device receives a first information packet. The first information packet includes data and/or signaling transmitted to the second terminal device by a first terminal device.

At S720, the second terminal device determines a first reverse path according to the received first information packet. The first reverse path is a reverse path of at least one transmitting path of the first information packet.

At S730, the second terminal device transmits a second information packet according to the first reverse path. The second information packet includes data and/or signaling being transmitted to the first terminal device by the second terminal device.

When receiving a first information packet of the first terminal device, the second terminal device determines a reverse path from transmitting paths of the first information packet according to the received first information packet. In this way, a suitable reverse path may be obtained, so that the communication efficiency is improved.

Alternatively, the first information packet further includes time information, the time information including time information indicating when the first terminal device transmits the first information packet and/or time information indicating when each forwarding device that forwards the first information packet receives the first information packet.

The operation that the second terminal device determines a first reverse path according to the received first information packet includes that, the second terminal device determines the first reverse path according to the time information.

Alternatively, the first reverse path is a reverse path of a transmitting path of the first information packet with a minimum delay.

Specifically, the second terminal device may select a reverse path of the transmitting path of the first information packet with the smallest delay, and transmit the second information packet to the first terminal device in the reverse path.

Alternatively, the format of the second information packet may be similar to the first information packet.

As an example useful for understanding the invention but do not form a part of the present invention, the base station may periodically distribute a delay threshold and a rate threshold of each link to the nodes under the coverage, and the thresholds may be used to determine whether the current node should continue to forward the information packet.

As an example useful for understanding the invention but do not form a part of the present invention, the base station may set an appropriate predetermined value according to the current terminal device density and the forwarding device density, so as to ensure that the delay communication is as small as possible under the premise of a certain communication rate, and furthermore, there is no waste of resources due to a huge amount of routing information in the predetermined area.

The method of transmitting normal service data has been described above, and the method for transmitting high priority information is described below.

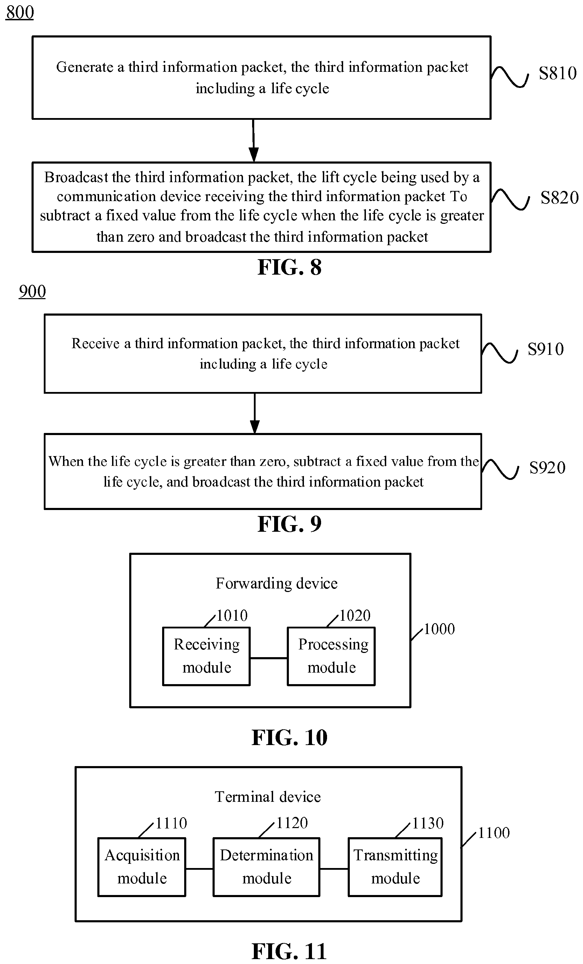

FIG. 8 illustrates a schematic block diagram of a communication method 800 according to another embodiment of the disclosure. The method 800 may be performed by an initial node such as a first terminal device in FIG. 1. As illustrated in FIG. 8, the method 800 includes the operations as follows.

At S810, a third information packet is generated, the third information packet including a life cycle.

At S820, the third information packet is broadcast. The life cycle is used by a communication device receiving the third information packet to subtract a fixed value from the life cycle when the life cycle is greater than zero and broadcast the third information packet.

The life cycle is set in the information packet, and for each subsequent forwarding, a fixed value is subtracted from the life cycle. For example, the fixed value may be 1, and the forwarding is stopped when the life cycle is zero, so that broadcast storms and information redundancy can be avoided.

Alternatively, before the third information packet is generated, the method further includes the operations as follows.

It is determined that information to be transmitted is high priority information.

The third information packet further includes an information level, the information level indicating that the third information packet includes the high priority information.

Alternatively, the high priority information is road condition safety information.

For example, if the information to be transmitted is road condition safety information, that is, it is indicated that the road section where the current transmitting vehicle is located is congested, the surrounding vehicles should avoid the congested road section as soon as possible, the life cycle of preset road condition safety information of a vehicle is being transmitted, and the information is broadcast to vehicles in the surrounding radius R. The information is forwarded by the surrounding vehicles, and the number of life cycles per forwarding is reduced by 1. When the number of life cycles is 0, the forwarding is stopped, thereby avoiding broadcast storms and information redundancy.

FIG. 9 illustrates a schematic block diagram of a communication method 900 according to another embodiment of the disclosure. The method 900 may be performed by an intermediate node. As illustrated in FIG. 9, the method 900 includes the operations as follows.

At S910, a third information packet is received, the third information packet including a life cycle.

At S920, when the life cycle is greater than zero, a fixed value is subtracted from the life cycle, and the third information packet is broadcast.

During forwarding of an information packet, for each forwarding, a fixed value is subtracted from the life cycle. For example, the fixed value may be 1, and the forwarding is stopped when the life cycle is zero, so that broadcast storms and information redundancy can be avoided.

Alternatively, the third information packet further includes an information level.

The method further includes determining that the third information packet includes high priority information according to the information level.

Alternatively, the high priority information is road condition safety information.

It should be understood that in various embodiments of the disclosure, the sequence numbers of the above processes do not imply a sequence of executions, and the order of execution of the processes should be determined by its function and internal logic, and should not be construed as limiting the implementation process of the embodiment of the disclosure.

The communication method according to the embodiment of the disclosure has been described in detail above, and various devices according to the embodiment of the disclosure will be described below. It should be understood that the various devices in the embodiment of the disclosure may perform the foregoing various methods of the embodiment of the disclosure, that is, the specific working processes of the following various devices may be seen from the corresponding processes in the foregoing method embodiments.

FIG. 10 illustrates a schematic block diagram of a forwarding device 1000 according to another embodiment of the disclosure. As illustrated in FIG. 10, the forwarding device 1000 includes a receiving module 1010 and a processing module 1020.

The receiving module 1010 is configured to receive a first information packet. The first information packet includes data and/or signaling being transmitted to a second terminal device by a first terminal device.

The processing module 1020 is configured to forward the first information packet according to a predetermined area. The predetermined area is an area centered at the forwarding device and covering a range of a predetermined value.

According to the forwarding device in the embodiments of the disclosure, an information packet is forwarded according to a predetermined area, so that the signaling overhead can be reduced, and thus the communication efficiency can be improved.

The first information packet further includes location information of the second terminal device.

The processing module 1020 is specifically configured to forward the first information packet according to the predetermined area and the location information of the second terminal device.

Alternatively, the processing module 1020 is specifically configured to, when the second terminal device is not in the predetermined area, transmit the first information packet to a second forwarding device at the edge of the predetermined area. The second forwarding device is located at a side of the forwarding device close to the second terminal device.

Alternatively, the processing module 1020 is configured to acquire routing information in the predetermined area, and transmit the first information packet to the second forwarding device according to the routing information in the predetermined area.

Alternatively, the processing module 1020 is specifically configured to, when the second terminal device is in the predetermined area, transmit the first information packet to the second terminal device.

Alternatively, the processing module 1020 is further configured to when receiving the first information packet, write time information indicating when the first information packet is received into the first information packet.

Alternatively, the first information packet further includes an information level.

The processing module 1020 is further configured to determine that the information level of the first information packet is a normal level according to the information level.

Alternatively, the predetermined value includes a predetermined distance or a predetermined number of hops.

The location information of the second terminal device includes location information of the second terminal device at time *T*₀ and/or time *T*₀ + Δ*T*, or location information at time *T*₀ and/or direction information at time *T*₀, where *T*₀ represents a specific time before the first terminal device transmits the first information packet, and Δ*T* represents a change in time.

Alternatively, the first information packet further includes at least one of identification information of the first terminal device, identification information of the second terminal device, or location information of the first terminal device.

The forwarding device 1000 according to the embodiment of the disclosure may correspond to the first forwarding device in the communication method according to the embodiment of the disclosure, and the above-described and other operations and/or functions of the respective modules in the forwarding device 1000 are respectively intended to implement the corresponding processes of the foregoing respective methods. For the sake of brevity, no descriptions will be repeated herein.

FIG. 11 illustrates a schematic block diagram of a terminal device 1100 according to another embodiment of the disclosure. As illustrated in FIG. 11, the terminal device 1100 includes an acquisition module 1110, a determination module 1120 and a transmitting module 1130.

The acquisition module 1110 is configured to acquire location information of a second terminal device. The second terminal device is a target terminal device of the terminal device.

The determination module 1120 is configured to determine at least one forwarding device according to the location information of the second terminal device. The forwarding device is a forwarding device to which the terminal device is accessible.

The transmitting module 1130 is configured to transmit a first information packet to the forwarding device, the first information packet including data and/or signaling being transmitted to the second terminal device by the terminal device.

According to the terminal device in the embodiments of the disclosure, an information packet is directionally transmitted according to location information, so that the communication efficiency can be improved.

The first information packet further includes location information of the second terminal device.

Alternatively, the first information packet further includes time information indicating when the terminal device transmits the first information packet.

Alternatively, the determination module 1120 is further configured to determine that an information level of the first information packet is a normal level.

The first information packet further includes the information level.

Alternatively, the first information packet further includes at least one of identification information of the terminal device, identification information of the second terminal device, or location information of the terminal device.

The location information of the terminal device includes location information of the terminal device at time *T*₀ and/or time *T*₀ + Δ*T*, or location information at time *T*₀ and/or direction information at time *T*₀. The location information of the second terminal device includes location information of the second terminal device at time *T*₀ and/or time *T*₀ + Δ*T*, or location information at time *T*₀ and/or direction information at time *T*₀. *T*₀ represents a specific time before the terminal device transmits the first information packet, and Δ*T* represents a change in time.

Alternatively, the acquisition module 1110 is configured to acquire location information of the terminal device at time *T*₀ from a positioning module of the terminal device, and/or determine location information of the terminal device at time *T*₀ + Δ*T*; or, acquire location information of the terminal device at time *T*₀ from the positioning module of the terminal device, and/or determine direction information of the terminal device at time *T*₀; and receive location information of the second terminal device transmitted by a base station.

Alternatively, the transmitting module 1130 is further configured to transmit location information of the terminal device at time *T*₀ and/or time *T*₀ + Δ*T* to the base station, or, transmit location information and/or direction information of the terminal device at time *T*₀ to the base station.

The terminal device 1100 according to the embodiment of the disclosure may correspond to the first terminal device in the communication method according to the embodiment of the disclosure, and the above-described and other operations and/or functions of the respective modules in the terminal device 1100 are respectively intended to implement the corresponding processes of the foregoing respective methods. For the sake of brevity, no descriptions will be repeated herein.

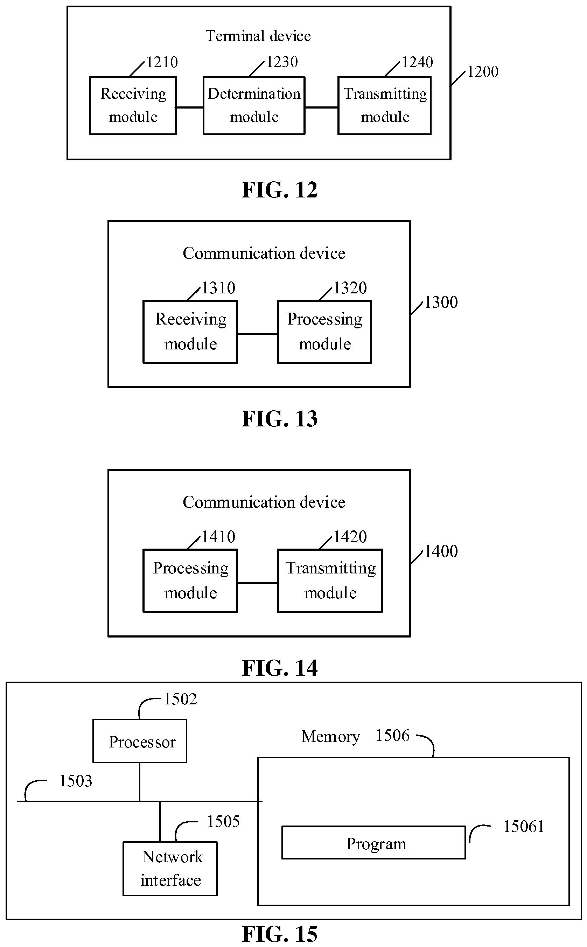

FIG. 12 illustrates a schematic block diagram of a terminal device 1200 according to another embodiment of the disclosure. As illustrated in FIG. 12, the terminal device 1200 includes a receiving module 1210, a determination module 1230 and a transmitting module 1240.

The receiving module 1210 is configured to receive a first information packet, the first information packet including data and/or signaling transmitted to the terminal device by a first terminal device.

The determination module 1230 is configured to determine a first reverse path according to the received first information packet, the first reverse path being a reverse path of at least one transmitting path of the first information packet.

The transmitting module 1240 is configured to transmit a second information packet according to the first reverse path, the second information packet including data and/or signaling being transmitted to the first terminal device by the terminal device.

According to the terminal device in the embodiments of the disclosure, a reverse path is determined from transmitting paths of a first information packet according to the received first information packet, and a suitable reverse path may be obtained, so that the communication efficiency is improved.

Alternatively, the first information packet further includes time information, the time information including time information indicating when the first terminal device transmits the first information packet and/or time information indicating when each forwarding device that forwards the first information packet receives the first information packet.

The determination module 1230 is specifically configured to determine the first reverse path according to the time information.

Alternatively, the first reverse path is a reverse path of a transmitting path of the first information packet with a minimum delay.

The terminal device 1200 according to the embodiment of the disclosure may correspond to the second terminal device in the communication method according to the embodiment of the disclosure, and the above-described and other operations and/or functions of the respective modules in the terminal device 1200 are respectively intended to implement the corresponding processes of the foregoing respective methods. For the sake of brevity, no descriptions will be repeated herein.

FIG. 13 illustrates a schematic block diagram of a communication device 1300 according to another embodiment of the disclosure. As illustrated in FIG. 13, the communication device 1300 includes a receiving module 1310 and a processing module 1320.

The receiving module 1310 is configured to receive a third information packet, the third information packet including a life cycle.

The processing module 1320 is configured to subtract, when the life cycle is greater than zero, a fixed value from the life cycle, and broadcast the third information packet.

Alternatively, the third information packet further includes an information level.

The processing module 1320 is further configured to determine that the third information packet includes high priority information according to the information level.

Alternatively, the high priority information is road condition safety information.

According to the communication device in the embodiments of the disclosure, broadcast storms and information redundancy can be avoided.

FIG. 14 illustrates a schematic block diagram of a communication device 1400 according to another embodiment of the disclosure. As illustrated in FIG. 14, the communication device 1400 includes a processing module 1410 and a transmitting module 1420.

The processing module 1410 is configured to generate a third information packet, the third information packet including a life cycle.

The transmitting module 1420 is configured to broadcast the third information packet. The life cycle is used by a communication device receiving the third information packet to subtract a fixed value from the life cycle when the life cycle is greater than zero and broadcast the third information packet.

Alternatively, the processing module 1410 is further configured to determine that information to be transmitted is high priority information.

The third information packet further includes an information level, the information level indicating that the third information packet includes the high priority information.

Alternatively, the high priority information is road condition safety information.

According to the communication device in the embodiments of the disclosure, broadcast storms and information redundancy can be avoided.

FIG. 15 shows a structure of a communication device according to another embodiment of the disclosure. The communication device includes at least one processor 1502 (such as a CPU), at least one network interface 1505 or other communication interfaces, a memory 1506, and at least one communication bus 1503 for implementing connection and communication between these devices. The processor 1502 is configured to execute executable modules, such as computer programs, stored in the memory 1506. The memory 1506 may include a high speed Random Access Memory (RAM), and may also include a non-volatile memory such as at least one disk storage. A communication connection with at least one other network element is achieved by at least one network interface 1505 (which may be wired or wireless).

As an example useful for understanding the invention but do not form a part of the present invention, the memory 1506 stores a program 15061, and the processor 1502 executes the program 15061 for performing the communication method according to any of the foregoing embodiments of the disclosure.

It should be understood that the specific examples herein are merely intended to provide a better understanding of the embodiments of the disclosure without limiting the scope of the embodiments of the disclosure.

It should be understood that in the embodiments of the disclosure, the term "and/or" is merely an association describing associated objects, indicating that there may be three relationships. For example, A and/or B may indicate that A exists separately, both A and B exist simultaneously, and B exists separately. In addition, the character "/" herein generally indicates that the contextual object is an "or" relationship.

Those of ordinary skill in the art will appreciate that units and algorithm operations of various examples described in the embodiments disclosed herein can be implemented in electronic hardware, computer software, or a combination of both. In order to clearly illustrate the interchangeability of hardware and software, the composition and operations of various examples have been generally described in terms of function in the foregoing description. Whether these functions are performed in hardware or software depends on the specific application and design constraints of the technical solution. A person skilled in the art can use different methods for implementing the described functions for each particular application, but such implementation should not be considered to be beyond the scope of the disclosure.

Those skilled in the art can clearly understand that for the convenience and brevity of the description, the specific working process of the system, the apparatus and the unit described above can be seen from the corresponding process in the foregoing method embodiment, and details are not described herein again.

In the several embodiments provided by the present application, it should be understood that the disclosed systems, apparatuses, and methods may be implemented in other manners. For example, the apparatus embodiments described above are merely illustrative. For example, the division of the unit is only a logical function division. In actual implementation, there may be another division manner, for example, multiple units or components may be combined or integrated into another system, or some features may be ignored or not executed. In addition, the coupling or direct coupling or communication connection illustrated or discussed may be an indirect coupling or communication connection through some interfaces, apparatuses or units, and may be electrical, mechanical or otherwise.

The units described as separate components may or may not be physically separated, and the components displayed as units may or may not be physical units, that is, may be located in one place, or may be distributed to multiple network units. Some or all of the units may be selected according to actual needs to achieve the purpose of the solution of the embodiment of the disclosure.

In addition, each functional unit in each embodiment of the disclosure may be integrated into one processing unit, or each unit may exist physically separately, or two or more units may be integrated into one unit. The integrated unit may be implemented in the form of hardware or implemented in the form of a software function unit.

The integrated unit may be stored in a computer-readable storage medium if being implemented in the form of a software functional unit and sold or used as a standalone product. Based on such understanding, the technical solution of the disclosure, which is essential to the prior art or all or part of the technical solution, may be embodied in the form of a software product stored in a storage medium, including a plurality of instructions used to cause a computer device (which may be a personal computer, server, or network device, etc.) to perform all or part of the operations of the methods described in various embodiments of the disclosure. The foregoing storage medium includes: a U disk, a mobile hard disk, a Read-Only Memory (ROM), a Random Access Memory (RAM), a magnetic disk, or an optical disk, and the like, which may store a program code.

The foregoing is only a specific implementation manner of the disclosure, but the scope of protection of the disclosure is not limited thereto. Therefore, the scope of protection of the disclosure should be determined by the scope of the claims.

## Claims

1. A communication method, comprising:
receiving (S210), by a forwarding device, a first information packet, the first information packet comprising location information of a second terminal device, an information priority, and at least one of data or signaling being transmitted to the second terminal device by a first terminal device, and the location information of the second terminal device comprising: location information of the second terminal device at time *T*₀ and time *T*₀ + Δ*T*, or, location information and direction information of the second terminal device at time *T*₀, where *T*₀ represents a specific time before the first terminal device transmits the first information packet, and Δ*T* represents a change in time;
wherein:
when determining that the first information packet is normal priority information according to the information priority, forwarding (S220), by the forwarding device, the first information packet according to a predetermined area and the location information of the second terminal device in a direction from the first terminal device to the second terminal device, the predetermined area being an area centered at the forwarding device and covering a range of a predetermined value; and
when determining that the first information packet is high priority information corresponding to road condition safety information according to the information priority, the information packet further comprising a life cycle, subtracting, by the forwarding device, a fixed value from the life cycle, and broadcasting the first information packet according to the predetermined area when the life cycle is greater than zero.

2. The method according to claim 1, wherein forwarding (S220), by the forwarding device, the first information packet according to the predetermined area and the location information of the second terminal device comprises:
determining, by the forwarding device, according to the predetermined area and the location information of the second terminal device whether the second terminal device is in the predetermined area;
when the second terminal device is not in the predetermined area, transmitting, by the forwarding device, the first information packet to another forwarding device at an edge of the predetermined area, wherein the another forwarding device is an area edge node of the predetermined area in the direction from the first terminal device to the second terminal device.

3. The method according to claim 2, further comprising:
acquiring, by the forwarding device, routing information in the predetermined area,
wherein transmitting, by the forwarding device, the first information packet to the another forwarding device at the edge of the predetermined area comprises:
transmitting, by the forwarding device, the first information packet to the another forwarding device according to the routing information in the predetermined area.

4. The method according to claim 1, wherein forwarding (S220), by the forwarding device, the first information packet according to the predetermined area and the location information of the second terminal device comprises:
when the second terminal device is in the predetermined area, transmitting, by the forwarding device, the first information packet to the second terminal device.

5. The method according to any one of claims 1 to 4, further comprising:
when the forwarding device receives the first information packet, writing time information indicating when the first information packet is received into the first information packet.

6. The method according to any one of claims 1 to 5, wherein the predetermined value comprises a predetermined distance or a predetermined number of hops.

7. The method according to any one of claims 1 to 6, wherein the first information packet further comprises at least one of the following:
identification information of the first terminal device,
identification information of the second terminal device, or
location information of the first terminal device.

8. A communication method, comprising:
acquiring (S410), by a first terminal device, location information of a second terminal device, wherein the second terminal device is a target terminal device of the first terminal device;
wherein:
when determining that a first information packet is normal priority information, determining (S420), by the first terminal device, at least one forwarding device according to the location information of the second terminal device, wherein the at least one forwarding device is a forwarding device which is accessible to the first terminal device; and transmitting (S430), by the first terminal device, the first information packet to the at least one forwarding device, the first information packet comprising location information of the second terminal device, an information priority, and at least one of data or signaling being transmitted to the second terminal device by the first terminal device, wherein the location information of the second terminal device comprises: location information of the second terminal device at time *T*₀ and time *T*₀ + Δ*T*, or, location information and direction information of the second terminal device at time *T*₀, where *T*₀ represents a specific time before the first terminal device transmits the first information packet, and Δ*T* represents a change in time; and
when determining that the first information packet is high priority information corresponding to road condition safety information, the first information packet further comprising a life cycle, broadcasting, by the first terminal device, the first information packet according to a predetermined area, the life cycle being used by the at least one forwarding device and/or the first or second terminal device to subtract a fixed value from the life cycle when the life cycle is greater than zero and broadcast the first information packet; and in response to transmitting the normal priority first information packet or broadcasting the high priority first information packet, receiving a second information packet at the first terminal device from the second terminal device, the second information packet comprising at least one of data or signaling.

9. The method according to claim 8, wherein the first information packet further comprises at least one of the following:
time information indicating when the first terminal device transmits the first information packet;
identification information of the first terminal device,
identification information of the second terminal device, or
location information of the first terminal device.

10. The method according to claim 9, wherein the location information of the first terminal device comprises:
location information of the first terminal device at one of the following: time *T*₀, or time *T*₀ + Δ*T*,
or,
at least one of location information or direction information of the first terminal device at time *T*₀,
wherein the method further comprises:
acquiring, by the first terminal device from a positioning module of the first terminal device, location information of the first terminal device at time *T*₀, and/or determining, from [[the]] positioning module of the first terminal device, location information of the first terminal device at time *T*₀ + Δ*T*; or,
acquiring, by the first terminal device from the positioning module of the first terminal device, location information of the first terminal device at time *T*₀, and/or determining, from the positioning module of the first terminal device, direction information of the first terminal at time *T*₀,
wherein acquiring (S410), by the first terminal device, location information of the second terminal device comprises: receiving, by the first terminal device, location information of the second terminal device transmitted by a base station.

11. The method according to claim 10, further comprising:
transmitting, by the first terminal device, location information of the first terminal device at at least one of time *T*₀ or time *T*₀ + Δ*T* to the base station; or,
transmitting, by the first terminal device, at least one of location information or direction information of the first terminal device at time *T*₀ to the base station.

12. A communication method, comprising:
receiving (S710), by a second terminal device, a first information packet, the first information packet comprising location information of the second terminal device, an information priority, and at least one of data or signaling transmitted to the second terminal device by a first terminal device or by a forwarding device;
wherein:
when determining that the first information packet is normal priority information according to the information priority, determining (S720), by the second terminal device, a first reverse path according to the received first information packet, the first reverse path being a reverse path of at least one transmitting path of the first information packet; and transmitting (S730), by the second terminal device, a second information packet according to the first reverse path, the second information packet comprising at least one of data or signaling being transmitted to the first terminal device by the second terminal device, wherein the at least one transmitting path of the first information packet is determined according to the location information of the second terminal device, wherein the location information of the second terminal device comprises: location information of the second terminal device at time *T*₀ and time *T*₀ + Δ*T*, or, location information and direction information of the second terminal device at time *T*₀, where *T*₀ represents a specific time before the first terminal device transmits the first information packet, and Δ*T* represents a change in time; and
when determining that the first information packet is high priority information corresponding to road condition safety information according to the information priority, the information packet further comprising a life cycle, subtracting, by the second terminal device, a fixed value from the life cycle, and broadcasting the first information packet according to a predetermined area when the life cycle is greater than zero, the predetermined area being an area centered at the second terminal device and covering a range of a predetermined value.

13. A forwarding device comprising means for implementing the method of any one of claims 1-7.

14. A terminal device comprising means for implementing the method of any one of claims 8-11.

15. A terminal device comprising means for implementing the method of claim 12.

## Patentansprüche

1. Kommunikationsverfahren, umfassend:
Empfangen (S210), durch eine Weiterleitungsvorrichtung, eines ersten Informationspakets, wobei das erste Informationspaket Standortinformationen einer zweiten Endgerätevorrichtung, eine Informationspriorität und wenigstens eines von Daten oder Signalisierung umfasst, die von einer ersten Endgerätevorrichtung an die zweite Endgerätevorrichtung übertragen werden, und wobei die Standortinformationen der zweiten Endgerätevorrichtung dies umfassen: Standortinformationen der zweiten Endgerätevorrichtung zum Zeitpunkt *T*₀ und zum Zeitpunkt *T₀+ΔT* oder Standortinformationen und Richtungsinformationen der zweiten Endgerätevorrichtung zum Zeitpunkt *T₀*, wobei *T₀* für einen spezifischen Zeitpunkt steht, bevor die erste Endgerätevorrichtung das erste Informationspaket überträgt, und *ΔT* für eine Zeitveränderung steht;
wobei:
wenn bestimmt wird, dass es sich bei dem ersten Informationspaket um Informationen mit normaler Priorität gemäß der Informationspriorität handelt, Weiterleiten (S220), durch die Weiterleitungsvorrichtung, des ersten Informationspakets gemäß einem vorbestimmten Gebiet und den Standortinformationen der zweiten Endgerätevorrichtung in einer Richtung von der ersten Endgerätevorrichtung zu der zweiten Endgerätevorrichtung, wobei das vorbestimmte Gebiet ein Gebiet ist, das an der Weiterleitungsvorrichtung zentriert ist und einen Bereich eines vorbestimmten Wertes abdeckt; und
wenn bestimmt wird, dass es sich bei dem ersten Informationspaket um Informationen mit hoher Priorität handelt, die Sicherheitsinformationen zum Straßenzustand gemäß der Informationspriorität entsprechen, wobei das Informationspaket ferner einen Lebenszyklus umfasst, Subtrahieren, durch die Weiterleitungsvorrichtung, eines festen Wertes von dem Lebenszyklus und Rundsenden des ersten Informationspakets gemäß dem vorbestimmten Gebiet, wenn der Lebenszyklus größer als Null ist.

2. Verfahren gemäß Anspruch 1, wobei das Weiterleiten (S220), durch die Weiterleitungsvorrichtung, des ersten Informationspakets gemäß dem vorbestimmten Gebiet und den Standortinformationen der zweiten Endgerätevorrichtung umfasst:
Bestimmen, durch die Weiterleitungsvorrichtung, gemäß dem vorbestimmten Gebiet und den Standortinformationen der zweiten Endgerätevorrichtung, ob sich die zweite Endgerätevorrichtung in dem vorbestimmten Gebiet befindet;
wenn sich die zweite Endgerätevorrichtung nicht in dem vorbestimmten Gebiet befindet, Übertragen, durch die Weiterleitungsvorrichtung, des ersten Informationspakets an eine andere Weiterleitungsvorrichtung an einem Rand des vorbestimmten Gebiets, wobei die andere Weiterleitungsvorrichtung ein Gebietsrandknoten des vorbestimmten Gebiets in Richtung von der ersten Endgerätevorrichtung zu der zweiten Endgerätevorrichtung ist.

3. Verfahren gemäß Anspruch 2, ferner umfassend:
Beziehen, durch die Weiterleitungsvorrichtung, von Routing-Informationen in dem vorbestimmten Gebiet, wobei das Übertragen, durch die Weiterleitungsvorrichtung, des ersten Informationspakets an die andere Weiterleitungsvorrichtung am Rand des vorbestimmten Gebiets umfasst:
Übertragen, durch die Weiterleitungsvorrichtung, des ersten Informationspakets an die andere Weiterleitungsvorrichtung gemäß den Routing-Informationen in dem vorbestimmten Gebiet.

4. Verfahren gemäß Anspruch 1, wobei das Weiterleiten (S220), durch die Weiterleitungsvorrichtung, des ersten Informationspakets gemäß dem vorbestimmten Gebiet und den Standortinformationen der zweiten Endgerätevorrichtung umfasst:
wenn sich die zweite Endgerätevorrichtung in dem vorbestimmten Gebiet befindet, Übertragen, durch die Weiterleitungsvorrichtung, des ersten Informationspakets an die zweite Endgerätevorrichtung.

5. Verfahren gemäß einem der Ansprüche 1 bis 4, ferner umfassend:
wenn die Weiterleitungsvorrichtung das erste Informationspaket empfängt, Schreiben von Zeitinformationen, die angeben, wann das erste Informationspaket in das erste Informationspaket empfangen wird.

6. Verfahren gemäß einem der Ansprüche 1 bis 5, wobei der vorbestimmte Wert eine vorbestimmte Entfernung oder eine vorbestimmte Anzahl von Streckenabschnitten (Hops) umfasst.

7. Verfahren gemäß einem der Ansprüche 1 bis 6, wobei das erste Informationspaket ferner wenigstens eines hiervon umfasst:
Identifikationsinformationen der ersten Endgerätevorrichtung,
Identifikationsinformationen der zweiten Endgerätevorrichtung oder
Standortinformationen der ersten Endgerätevorrichtung.

8. Kommunikationsverfahren, umfassend:
Beziehen (S410), von einer ersten Endgerätevorrichtung, von Standortinformationen einer zweiten Endgerätevorrichtung, wobei die zweite Endgerätevorrichtung eine Ziel-Endgerätevorrichtung der ersten Endgerätevorrichtung ist; wobei:
wenn bestimmt wird, dass es sich bei einem ersten Informationspaket um Informationen mit normaler Priorität handelt, Bestimmen (S420), durch die erste Endgerätevorrichtung, von wenigstens einer Weiterleitungsvorrichtung gemäß den Standortinformationen der zweiten Endgerätevorrichtung, wobei die wenigstens eine Weiterleitungsvorrichtung eine Weiterleitungsvorrichtung ist, die für die erste Endgerätevorrichtung zugänglich ist; und Übertragen (S430), durch die erste Endgerätevorrichtung, des ersten Informationspakets an die wenigstens eine Weiterleitungsvorrichtung, wobei das erste Informationspaket Standortinformationen der zweiten Endgerätevorrichtung, eine Informationspriorität und wenigstens eines von Daten oder Signalisierung umfasst, die durch die erste Endgerätevorrichtung an die zweite Endgerätevorrichtung übertragen werden, wobei die Standortinformationen der zweiten Endgerätevorrichtung umfassen: Standortinformationen der zweiten Endgerätevorrichtung zum Zeitpunkt *T₀* und zum Zeitpunkt *T₀+ΔT* oder Standortinformationen und Richtungsinformationen der zweiten Endgerätevorrichtung zum Zeitpunkt *T₀*, wobei *T₀* für einen spezifischen Zeitpunkt steht, bevor die erste Endgerätevorrichtung das erste Informationspaket überträgt, und *ΔT* für eine Zeitveränderung steht; und
wenn bestimmt wird, dass es sich bei dem ersten Informationspaket um Informationen mit hoher Priorität handelt, die Sicherheitsinformationen zum Straßenzustand entsprechen, wobei das erste Informationspaket ferner einen Lebenszyklus umfasst, Rundsenden, durch die erste Endgerätevorrichtung, des ersten Informationspakets gemäß einem vorbestimmten Gebiet, wobei der Lebenszyklus von der wenigstens einen Weiterleitungsvorrichtung und/oder der ersten oder zweiten Endgerätevorrichtung verwendet wird, um einen festen Wert von dem Lebenszyklus zu subtrahieren, wenn der Lebenszyklus größer als Null ist, und das erste Informationspaket rundzusenden; und, in Reaktion auf das Übertragen des ersten Informationspakets mit normaler Priorität oder das Rundsenden des ersten Informationspakets mit hoher Priorität, Empfangen eines zweiten Informationspakets von der zweiten Endgerätevorrichtung an der ersten Endgerätevorrichtung, wobei das zweite Informationspaket wenigstens eines von Daten oder Signalisierung umfasst.

9. Verfahren gemäß Anspruch 8, wobei das erste Informationspaket ferner wenigstens eines hiervon umfasst:
Zeitinformationen, die angeben, wann die erste Endgerätevorrichtung das erste Informationspaket überträgt;
Identifikationsinformationen der ersten Endgerätevorrichtung,
Identifikationsinformationen der zweiten Endgerätevorrichtung oder
Standortinformationen der ersten Endgerätevorrichtung.

10. Verfahren gemäß Anspruch 9, wobei die Standortinformationen der ersten Endgerätevorrichtung umfassen:
Standortinformationen der ersten Endgerätevorrichtung zu einem der folgenden: Zeitpunkt *T₀* oder Zeitpunkt *T₀+ΔT* oder
wenigstens eines von Standortinformationen oder Richtungsinformationen der ersten Endgerätevorrichtung zum Zeitpunkt *T₀*,
wobei das Verfahren ferner umfasst:
Beziehen, durch die erste Endgerätevorrichtung, von einem Positionsbestimmungsmodul der ersten Endgerätevorrichtung, von Standortinformationen der ersten Endgerätevorrichtung zum Zeitpunkt *T₀* und/oder Bestimmen, anhand des Positionsbestimmungsmoduls der ersten Endgerätevorrichtung, von Standortinformationen der ersten Endgerätevorrichtung zum Zeitpunkt *T₀+ΔT*; oder,
Beziehen, durch die erste Endgerätevorrichtung, von dem Positionierungsmodul der ersten Endgerätevorrichtung, von Standortinformationen der ersten Endgerätevorrichtung zum Zeitpunkt *T₀* und/oder Bestimmen, anhand des Positionierungsmoduls der ersten Endgerätevorrichtung, von Richtungsinformationen der ersten Endgerätevorrichtung zum Zeitpunkt *T₀*,
wobei das Beziehen (S410), durch die erste Endgerätevorrichtung, von Standortinformationen der zweiten Endgerätevorrichtung umfasst: Empfangen, durch die erste Endgerätevorrichtung, von Standortinformationen der zweiten Endgerätevorrichtung, die von einer Basisstation übertragen werden.

11. Verfahren gemäß Anspruch 10, ferner umfassend:
Übertragen, durch die erste Endgerätevorrichtung, von Standortinformationen der ersten Endgerätevorrichtung zu wenigstens einem von Zeitpunkt *T₀* oder Zeitpunkt *T₀+ΔT* an die Basisstation; oder,
Übertragen, durch die erste Endgerätevorrichtung, von wenigstens einem von Standortinformationen oder Richtungsinformationen der ersten Endgerätevorrichtung zum Zeitpunkt *T₀* an die Basisstation.

12. Kommunikationsverfahren, umfassend:
Empfangen (S710), durch eine zweite Endgerätevorrichtung, eines ersten Informationspakets, wobei das erste Informationspaket Standortinformationen der zweiten Endgerätevorrichtung, eine Informationspriorität und wenigstens eines von Daten oder Signalisierung umfasst, die von einer ersten Endgerätevorrichtung oder von einer Weiterleitungsvorrichtung an die zweite Endgerätevorrichtung übertragen werden; wobei:
wenn bestimmt wird, dass es sich bei dem ersten Informationspaket um Informationen mit normaler Priorität gemäß der Informationspriorität handelt, Bestimmen (S720), durch die zweite Endgerätevorrichtung, eines ersten Rückpfades gemäß dem empfangenen ersten Informationspaket, wobei der erste Rückpfad ein Rückpfad wenigstens eines Übertragungspfades des ersten Informationspakets ist; und
Übertragen (S730), durch die zweite Endgerätevorrichtung, eines zweiten Informationspakets gemäß dem ersten Rückpfad, wobei das zweite Informationspaket wenigstens eines von Daten oder Signalisierung umfasst, die durch die zweite Endgerätevorrichtung an die erste Endgerätevorrichtung übertragen werden, wobei der wenigstens eine Übertragungspfad des ersten Informationspakets gemäß den Standortinformationen der zweiten Endgerätevorrichtung bestimmt wird, wobei die Standortinformationen der zweiten Endgerätevorrichtung umfassen: Standortinformationen der zweiten Endgerätevorrichtung zum Zeitpunkt *T₀* und zum Zeitpunkt *T₀+ΔT* oder Standortinformationen und Richtungsinformationen der zweiten Endgerätevorrichtung zum Zeitpunkt *T₀*, wobei *T₀* für einen spezifischen Zeitpunkt steht, bevor die erste Endgerätevorrichtung das erste Informationspaket überträgt, und *ΔT* für eine Zeitveränderung steht; und
wenn bestimmt wird, dass es sich bei dem ersten Informationspaket um Informationen mit hoher Priorität handelt, die Sicherheitsinformationen zum Straßenzustand gemäß der Informationspriorität entsprechen, wobei das Informationspaket ferner einen Lebenszyklus umfasst, Subtrahieren, durch die zweite Endgerätevorrichtung, eines festen Wertes von dem Lebenszyklus und Rundsenden des ersten Informationspakets gemäß einem vorbestimmten Gebiet, wenn der Lebenszyklus größer als Null ist, wobei das vorbestimmte Gebiet ein Gebiet ist, das an der zweiten Endgerätevorrichtung zentriert ist und einen Bereich eines vorbestimmten Wertes abdeckt.

13. Weiterleitungsvorrichtung, umfassend Mittel zum Implementieren des Verfahrens nach einem der Ansprüche 1-7.

14. Endgerätevorrichtung, umfassend Mittel zum Implementieren des Verfahrens nach einem der Ansprüche 8-11.

15. Endgerätevorrichtung, umfassend Mittel zum Implementieren des Verfahrens nach Anspruch 12.

## Revendications

1. Procédé de communication comprenant :
la réception (S210), par un dispositif d'acheminement, d'un premier paquet d'informations, le premier paquet d'informations comprenant des informations de localisation d'un second dispositif terminal, une priorité des informations, et des données et/ou une signalisation transmise(s) au second dispositif terminal par un premier dispositif terminal, et les informations de localisation du second dispositif terminal comprenant : des informations de localisation du second dispositif terminal au temps T₀ et au temps T₀ + ΔT, ou des informations de localisation et des informations de direction du second dispositif terminal au temps T₀, où T₀ représente un temps spécifique avant que le premier dispositif terminal ne transmette le premier paquet d'informations, et ΔT représente un changement dans le temps ;
dans lequel :
lorsqu'il est déterminé que le premier paquet d'informations est constitué d'informations de priorité normale selon la priorité des informations, l'acheminement (S220), par le dispositif d'acheminement, du premier paquet d'informations en fonction d'une zone prédéterminée et des informations de localisation du second dispositif terminal dans une direction allant du premier dispositif terminal au second dispositif terminal, la zone prédéterminée étant une zone centrée sur le dispositif d'acheminement et couvrant une plage d'une valeur prédéterminée ; et
lorsqu'il est déterminé que le premier paquet d'informations est constitué d'informations de haute priorité correspondant à des informations de sécurité de conditions routières en fonction de la priorité des informations, le paquet d'informations comprenant en outre un cycle de vie, la soustraction, par le dispositif d'acheminement, d'une valeur fixe du cycle de vie, et la diffusion du premier paquet d'informations en fonction de la zone prédéterminée lorsque le cycle de vie est supérieur à zéro.

2. Procédé selon la revendication 1, dans lequel l'acheminement (S220), par le dispositif d'acheminement, du premier paquet d'informations en fonction de la zone prédéterminée et des informations de localisation du second dispositif terminal comprend :
la détermination, par le dispositif d'acheminement, en fonction de la zone prédéterminée et des informations de localisation du second dispositif terminal, si le second dispositif terminal se trouve dans la zone prédéterminée ;
lorsque le second dispositif terminal ne se trouve pas dans la zone prédéterminée, la transmission, par le dispositif d'acheminement, du premier paquet d'informations à un autre dispositif d'acheminement situé au niveau d'une périphérie de la zone prédéterminée, dans lequel l'autre dispositif d'acheminement est un noeud périphérique de zone de la zone prédéterminée dans la direction allant du premier dispositif terminal au second dispositif terminal.

3. Procédé selon la revendication 2, comprenant en outre :
l'acquisition, par le dispositif d'acheminement, d'informations de routage dans la zone prédéterminée,
dans lequel la transmission, par le dispositif d'acheminement, du premier paquet d'informations à l'autre dispositif d'acheminement situé au niveau de la périphérie de la zone prédéterminée comprend :
la transmission, par le dispositif d'acheminement, du premier paquet d'informations à l'autre dispositif d'acheminement en fonction des informations d'acheminement dans la zone prédéterminée.

4. Procédé selon la revendication 1, dans lequel l'acheminement (S220), par le dispositif d'acheminement, du premier paquet d'informations en fonction de la zone prédéterminée et des informations de localisation du second dispositif terminal comprend :
lorsque le second dispositif terminal se trouve dans la zone prédéterminée, la transmission, par le dispositif d'acheminement, du premier paquet d'informations au second dispositif terminal.

5. Procédé selon l'une quelconque des revendications 1 à 4, comprenant en outre :
lorsque le dispositif d'acheminement reçoit le premier paquet d'informations, l'écriture, dans le premier paquet d'informations, d'informations temporelles indiquant le moment où le premier paquet d'informations est reçu.

6. Procédé selon l'une quelconque des revendications 1 à 5, dans lequel la valeur prédéterminée comprend une distance prédéterminée ou un nombre de bonds prédéterminé.

7. Procédé selon l'une quelconque des revendications 1 à 6, dans lequel le premier paquet d'informations comprend en outre au moins l'un parmi ce qui suit :
des informations d'identification du premier dispositif terminal,
des informations d'identification du second terminal, ou
des informations de localisation du premier dispositif terminal.

8. Procédé de communication comprenant :
l'acquisition (S410), par un premier dispositif terminal, d'informations de localisation d'un second dispositif terminal, dans lequel le second dispositif terminal est un dispositif terminal cible du premier dispositif terminal ;
dans lequel :
lorsqu'il est déterminé qu'un premier paquet d'informations est constitué d'informations de priorité normale, la détermination (S420), par le premier dispositif terminal, d'au moins un dispositif d'acheminement en fonction des informations de localisation du second dispositif terminal, dans lequel l'au moins un dispositif d'acheminement est un dispositif d'acheminement auquel le premier dispositif terminal peut avoir accès ; et la transmission (S430), par le premier dispositif terminal, du premier paquet d'informations à l'au moins un dispositif d'acheminement, le premier paquet d'informations comprenant des informations de localisation du second dispositif terminal, une priorité des informations, et des données et/ou une signalisation transmise(s) au second dispositif terminal par le premier dispositif terminal, dans lequel les informations de localisation du second dispositif terminal comprennent : des informations de localisation du second dispositif terminal au temps T₀ et au temps T₀ + ΔT, ou des informations de localisation et des informations de direction du second dispositif terminal au temps T₀, où T₀ représente un temps spécifique avant que le premier dispositif terminal ne transmette le premier paquet d'informations, et ΔT représente un changement dans le temps ; et
lorsqu'il est déterminé que le premier paquet d'informations est constitué d'informations de haute priorité correspondant à des informations de sécurité de conditions routières, le premier paquet d'informations comprenant en outre un cycle de vie, la diffusion, par le premier dispositif terminal, du premier paquet d'informations en fonction d'une zone prédéterminée, le cycle de vie étant utilisé par l'au moins un dispositif d'acheminement et/ou le premier ou second dispositif terminal pour soustraire une valeur fixe du cycle de vie lorsque le cycle de vie est supérieur à zéro et diffuser le premier paquet d'informations ; et en réponse à la transmission du premier paquet d'informations de priorité normale ou à la diffusion du premier paquet d'informations de haute priorité, la réception d'un second paquet d'informations au niveau du premier dispositif terminal à partir du second dispositif terminal, le second paquet d'informations comprenant des données et/ou une signalisation.

9. Procédé selon la revendication 8, dans lequel le premier paquet d'informations comprend en outre au moins l'un de ce qui suit :
des informations temporelles indiquant quand le premier dispositif terminal transmet le premier paquet d'informations ;
des informations d'identification du premier dispositif terminal,
des informations d'identification du second terminal, ou
des informations de localisation du premier dispositif terminal.

10. Procédé selon la revendication 9, dans lequel les informations de localisation du premier dispositif terminal comprennent :
des informations de localisation du premier dispositif terminal à l'un des temps suivants : temps T₀, ou temps T₀ + ΔT,
ou,
des informations de localisation et/ou des informations de direction du premier dispositif terminal au temps T₀,
le procédé comprenant en outre :
l'acquisition, par le premier dispositif terminal à partir d'un module de positionnement du premier dispositif terminal, d'informations de localisation du premier dispositif terminal au temps T₀, et/ou la détermination, à partir du module de positionnement du premier dispositif terminal, d'informations de localisation du premier dispositif terminal au temps T₀ + ΔT ; ou,
l'acquisition, par le premier dispositif terminal à partir du module de positionnement du premier dispositif terminal, d'information de localisation du premier dispositif terminal au temps T₀, et/ou la détermination, à partir du module de positionnement du premier dispositif terminal, d'informations de direction du premier dispositif terminal au temps T₀,
dans lequel l'acquisition (S410), par le premier dispositif terminal, d'informations de localisation du second dispositif terminal comprend : la réception, par le premier dispositif terminal, d'informations de localisation du second dispositif terminal transmises par une station de base.

11. Procédé selon la revendication 10, comprenant en outre :
la transmission, par le premier dispositif terminal, d'informations de localisation du premier dispositif terminal à au moins l'un d'un temps T₀ ou d'un temps T₀ + ΔT à la station de base ; ou,
la transmission, par le premier dispositif terminal, d'informations de localisation et/ou d'informations de direction du premier dispositif terminal au temps T₀ à la station de base.

12. Procédé de communication comprenant :
la réception (S710), par un second dispositif terminal, d'un premier paquet d'informations, le premier paquet d'informations comprenant des informations de localisation du second dispositif terminal, une priorité des informations, et des données et/ou une signalisation transmise(s) au second dispositif terminal par un premier dispositif terminal ou par un dispositif d'acheminement ;
dans lequel :
lorsqu'il est déterminé que le premier paquet d'informations est constitué d'informations de priorité normale en fonction de la priorité des informations, la détermination (S720), par le second dispositif terminal, d'un premier chemin inverse en fonction du premier paquet d'informations reçu, le premier chemin inverse étant un chemin inverse d'au moins un chemin de transmission du premier paquet d'informations ; et la transmission (S730), par le second dispositif terminal, d'un second paquet d'informations en fonction du premier chemin inverse, le second paquet d'informations comprenant des données et/ou une signalisation transmise(s) au premier dispositif terminal par le second dispositif terminal, dans lequel l'au moins un chemin de transmission du premier paquet d'informations est déterminé en fonction des informations de localisation du second dispositif terminal, dans lequel les informations de localisation du second dispositif terminal comprennent : des informations de localisation du second dispositif terminal au temps T₀ et au temps T₀ + ΔT, ou, des informations de localisation et des informations de direction du second dispositif terminal au temps T₀, où T₀ représente un temps spécifique avant que le premier dispositif terminal ne transmette le premier paquet d'informations, et ΔT représente un changement dans le temps ; et
lorsqu'il est déterminé que le premier paquet d'informations est constitué d'informations de haute priorité correspondant à des informations de sécurité de conditions routières en fonction de la priorité des informations, le paquet d'informations comprenant en outre un cycle de vie, la soustraction, par le second dispositif terminal, d'une valeur fixe du cycle de vie, et la diffusion du premier paquet d'informations en fonction d'une zone prédéterminée lorsque le cycle de vie est supérieur à zéro, la zone prédéterminée étant une zone centrée sur le second dispositif terminal et couvrant une plage d'une valeur prédéterminée.

13. Dispositif d'acheminement comprenant des moyens pour mettre en œuvre le procédé selon l'une quelconque des revendications 1 à 7.

14. Dispositif terminal comprenant des moyens pour mettre en œuvre le procédé selon l'une quelconque des revendications 8 à 11.

15. Dispositif terminal comprenant des moyens pour mettre en œuvre le procédé de la revendication 12.
